(19) Europäisches Patentamt
European Patent Office
Office européen des brevets

(11) **EP 2 111 080 A2**

(12) **EUROPEAN PATENT APPLICATION**

(43) Date of publication:
**21.10.2009 Bulletin 2009/43**

(51) Int Cl.:
***H04W 72/04*** *(2009.01)*

(21) Application number: **09158165.2**

(22) Date of filing: **17.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **18.04.2008 KR 20080036403**

(71) Applicant: **Samsung Electronics Co., Ltd.**
**Suwon-si**
**Gyeonggi-do (KR)**

(72) Inventors:
• **Seol, Ji-Yun**
  **Seongnam-si, Gyeonggi-do (KR)**

• **Park, Yun-Sang**
  **Suwon-si, Gyeonggi-do (KR)**
• **Kim, Young-Hak**
  **Suwon-si, Gyeonggi-do (KR)**
• **Oh, Chang-Yoon**
  **Yongin-si, Gyeonggi-do (KR)**

(74) Representative: **Ketelaars, Maarten F.J.M.**
**Nederlandsch Octrooibureau**
**J.W. Frisolaan 13**
**2517 JS  Den Haag (NL)**

(54) **Apparatus and method for allocating uplink resources in a wireless communication system**

(57)     An apparatus and a method for allocating an uplink resource in a wireless communication system that uses a Half duplex-Frequency Division Duplex (H-FDD) scheme. The apparatus includes a controller and a message generator. The controller determines a resource allocation scheme enabling an F-FDD mobile station to allocate uplink bursts to a first group and a second group using one MAP message. The message generator generates a MAP message indicating the resource allocation scheme determined by the controller.

FIG.2

EP 2 111 080 A2

**Description**

**BACKGROUND OF THE INVENTION**

1. Field of the Invention

The present invention relates generally to an apparatus and a method for constructing a frame in a wireless communication system, and more particularly, to an apparatus and a method for allocating an uplink resource in a wireless communication system using a Half duplex-Frequency Division Duplex (H-FDD) scheme.

2. Description of the Related Art

An Orthogonal Frequency Division Multiple Access (OFDMA) technique is currently recognized as the most likely candidate technique for a next generation communication system. The next generation communication system will simultaneously support multimedia services having various traffic characteristics. Therefore, a duplexing scheme with consideration of continuity of uplink and downlink transmission, which depends on service characteristics, is required to efficiently provide the services of these various characteristics.

A duplexing scheme used for the next generation communication system is generally classified into a Time Division Duplexing (TDD) scheme and a Frequency Division Duplexing (FDD) scheme. A transmitter, e.g., a Base Station (BS), transmits data to receivers, e.g., Mobile Stations (MS), using at least one of the TDD scheme and the FDD scheme.

The BS and the MS may communicate using a Full duplex-Frequency Division Duplexing (F-FDD) scheme or an H-FDD scheme. When the BS uses F-DD, the BS should basically support an H-FDD mobile station as well as an F-FDD mobile station.

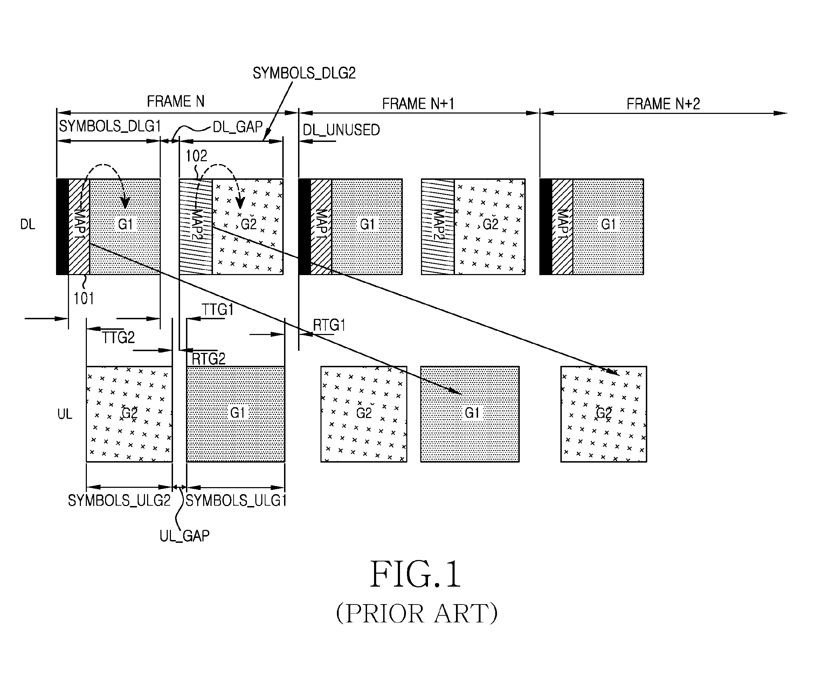

FIG. 1 illustrates a frame construction of a conventional wireless communication system that uses an H-FDD scheme.

Referring to FIG. 1, during an operation of an H-FDD frame structure, a DownLink (DL)-MAP/UpLink (UL)-MAP of each group is configured to indicate downlink bursts and uplink bursts allocated to a relevant group. More specifically, as illustrated in FIG. 1, a DL-MAP or UL-MAP (101), which belongs to a group 1 (G1), is configured to indicate downlink bursts allocated to a downlink group 1 (DL G1) or uplink bursts allocated to an uplink group 1 (UL G1). However, a UL-MAP is configured to indicate bursts allocated to an uplink subframe of a relevant group after one frame in time, considering a processing time. In terms of a frame number, UL-MAP1 (101) for a group 1 in a frame N indicates uplink burst allocation for an uplink group 1 of a frame (N+1), and UL-MAP2 (102) for a group 2 indicates uplink burst allocation for an uplink group 2 of a frame (N+2).

In the above-described H-FDD frame structure, the UL-MAP in each group only allocates uplink bursts to an uplink subframe of a relevant group.

However, unlike H-FDD, a mobile station supporting Full-FDD (F-FDD) may support uplink/downlink simultaneously, but is operated only in the same way as an H-FDD mobile station. For example, while an F-FDD mobile station may support a downlink group 1 and an uplink group 2 simultaneously, it is impossible for a relevant F-FDD mobile station to allocate uplink bursts to two uplink groups using one UL-MAP because there is a limitation in a correlation between a group to which the MAP belongs and a burst allocation group, and there is no indication method through the MAP.

**SUMMARY OF THE INVENTION**

The present invention has been designed to address at least the above problems and/or disadvantages and to provide at least the advantages described below. Accordingly, an aspect of the present invention is to provide an apparatus and a method enabling an F-FDD mobile station to allocate uplink bursts in a mobile communication system having an H-FDD frame structure.

Another aspect of the present invention is to provide an apparatus and a method enabling an F-FDD mobile station to allocate uplink bursts to two uplink groups using one UL-MAP.

Still another aspect of the present invention is to provide an apparatus and a method enabling uplink burst allocation to a first uplink group relevant to the group including a MAP message and a second uplink group not relevant to the group including a MAP message in a mobile communication system having an H-FDD frame structure.

In accordance with an aspect of the present invention, a transmitter enabling a Full-FDD mobile station to allocate uplink bursts in a mobile communication system having a Half-Frequency Division Duplex (H-FDD) frame structure separately operating in two groups is provided. The transmitter includes a controller for determining a resource allocation scheme enabling a relevant F-FDD mobile station to allocate uplink bursts to two uplink groups using one MAP message; and a message generator for generating a MAP message including the resource allocation scheme determined by the controller.

In accordance with another aspect of the present invention, a method of enabling an F-FDD mobile station to allocate uplink bursts in a mobile communication system having an H-FDD frame structure separately operating in two groups is provided. The method includes determining a resource allocation scheme enabling a relevant F-FDD mobile station to allocate uplink bursts to two uplink groups using one MAP message; and generating a MAP message including the determined resource allocation scheme.

In accordance with another aspect of the present invention, an apparatus enabling an F-FDD mobile station to allocate uplink bursts in a mobile communication system having an H-FDD frame structure separately operating in two groups is provided. The apparatus includes a message reader for determining a resource allocation scheme instructing uplink burst allocation to two uplink groups using one MAP message; and a controller for allocating uplink bursts to the two uplink groups according to the determined resource allocation scheme.

## BRIEF DESCRIPTION OF THE DRAWINGS

The above and other aspects, features, and advantages of certain embodiments of the present invention will be more apparent from the following description taken in conjunction with the accompanying drawings in which:

FIG. 1 is a diagram illustrating a frame construction of a conventional wireless communication system using an H-FDD scheme;

FIG. 2 is a block diagram illustrating a base station of a wireless communication system using an H-FDD scheme according to an embodiment of the present invention;

FIG. 3 is a block diagram illustrating a mobile station of a wireless communication system using an H-FDD scheme according to an embodiment of the present invention;

FIG. 4 is a flowchart illustrating a process of determining whether to allocate bursts to a gap between uplink subframes at a base station according to an embodiment of the present invention;

FIG. 5 is a flowchart illustrating a process of setting information that enables a base station to allocate bursts to a gap between uplink subframes according to an embodiment of the present invention;

FIG. 6 is a flowchart illustrating a process of setting information that enables a base station to allocate bursts to a different group according to an embodiment of the present invention;

FIG. 7 is a flowchart illustrating a process of setting information that enables a base station to allocate bursts to a successive subframe according to an embodiment of the present invention;

FIG. 8 is a flowchart illustrating a process of allocating uplink bursts at a mobile station according to an embodiment of the present invention;

FIG. 9 is a flowchart illustrating a process of allocating uplink bursts to a gap between uplink subframes at a mobile station according to an embodiment of the present invention;

FIG. 10 is a flowchart illustrating a process of allocating uplink bursts to a different group at a mobile station according to an embodiment of the present invention;

FIG. 11 is a flowchart illustrating a process of allocating bursts to a successive subframe at a mobile station according to an embodiment of the present invention;

FIG. 12 is a flowchart illustrating a process of determining whether a mobile station satisfies a condition for allocating bursts to a gap between uplink subframes according to an embodiment of the present invention;

FIG. 13 is a diagram illustrating a frame construction of a wireless communication system using an H-FDD scheme according to an embodiment of the present invention; and

FIGs. 14A-14E illustrate bursts being allocated to a gap between uplink subframes and a different subframe in a wireless communication system using an H-FDD scheme according to an embodiment of the present invention.

## DETAILED DESCRIPTION OF EMBODIMENTS OF THE INVENTION

Embodiments of the present invention will be described herein below with reference to the accompanying drawings. In the following description, well-known functions or constructions are not described in detail as they may obscure the present invention in unnecessary detail.

The embodiments of the present invention described below provide an apparatus and a method enabling uplink bursts to be allocated to a first group including a MAP message and a second group not including a MAP message, in order to allocate uplink bursts for an F-FDD mobile station in a mobile communication system having an H-FDD frame structure.

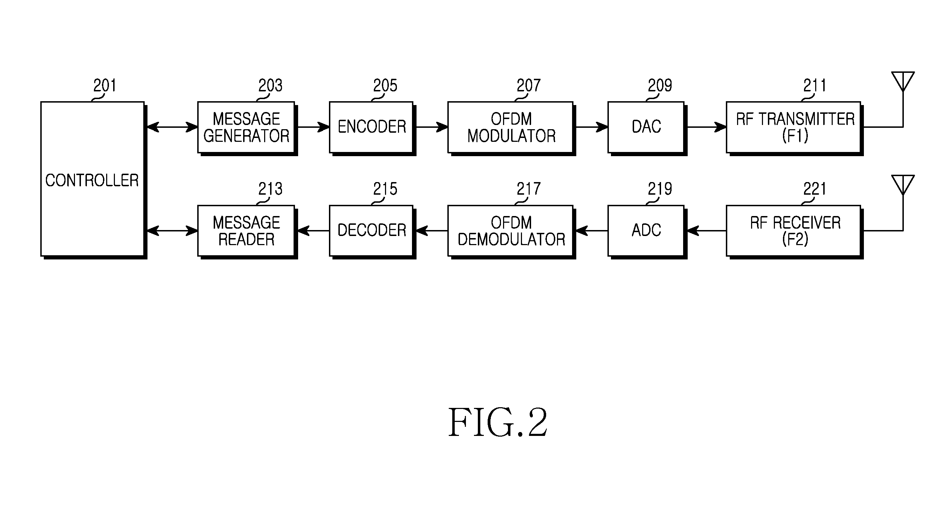

FIG. 2 is a block diagram illustrating a base station of a wireless communication system using an H-FDD scheme according to an embodiment of the present invention.

Referring to FIG. 2, the base station includes a controller 201, a message generator 203, an encoder 205, an OFDM modulator 207, a Digital-to-Analog Converter (DAC) 209, a Radio Frequency (RF) transmitter 211, an RF receiver 221, an Analog-to-Digital Converter (ADC) 219, an OFDM demodulator 217, a decoder 215, and a message reader 213. The controller 201 controls an overall operation of the base station, i.e., the controller 201 performs a relevant processes according to control information from the message reader 213, provides information required for generating a control message to the message generator 203, and generates information enabling a relevant Full-FDD (F-FDD) mobile station to allocate uplink bursts to a first uplink group relevant to the group including a MAP message and a second uplink group not relevant to the group including a MAP message, or vice versa, the two uplink groups, i.e., the first uplink group and the second uplink group, using one MAP message according to an embodiment of the present invention.

For example, the controller determines (1) whether to allocate uplink bursts to a gap between uplink subframes, i.e., allocate the uplink bursts to the a uplink group and the gap between the two uplink groups in succession, (2) whether to allocate the uplink bursts to a different subframe, i.e., allocate the uplink bursts, separately from the two uplink groups, or (3) whether to allocate the uplink bursts subsequently to two different uplink subframes, i.e., allocate the uplink bursts in succession to the two uplink groups, and then generates a MAP message including resource allocation information representing the above-determined uplink burst allocation scheme.

The message generator 203 generates a Media Access Control (MAC) message using various information provided from the controller 201, and transfers the MAC message to the encoder 205. The message generator 203 according to an embodiment of the present invention generates a MAP message including resource allocation information.

The encoder 205 encodes and modulates data (or a message) from the message generator 203 according to a predetermined Modulation and Coding Scheme (MCS), and outputs the encoded data. The OFDM modulator 207 outputs sample data (e.g., OFDM symbols) by performing Inverse Fast Fourier Transform (IFFT) on the encoded data from the encoder 205. Thereafter, the DAC 209 converts the sample data into analog signals.

The RF transmitter 211 converts an analog signal from the DAC 209 into an RF signal using a first frequency (f1) (downlink carrier), and transmits the RF signal via an antenna.

The RF receiver 221 converts a signal received via an antenna into a baseband signal using a second frequency (f2) (uplink carrier). Because the base station according to an embodiment of the present invention uses an F-FDD scheme, the base station may transmit a downlink signal using the first frequency and simultaneously receive an uplink signal using the second frequency.

The ADC 219 converts an analog signal from the RF receiver 221 into sample data. The OFDM demodulator 217 outputs data in a frequency domain by performing Fast Fourier Transform (FFT) on the sample data output from the ADC 219. The decoder 215 aligns data in the frequency domain from the OFDM demodulator 217 on a burst basis, demodulates and decodes each burst according to a predetermined MCS, and outputs the decoded bursts.

The message reader 213 detects a packet (for example, a MAC Packet Data Unit (PDU)) of a predetermined unit from data provided from the decoder 215, and performs a header test and an error test on the detected packet. When it is determined that a detected packet is a control message, the message reader 213 reads the control message according to a prescribed standard, and provides a result thereof to the controller 201. Specifically, the message reader 213 extracts various control information from a received control message, and transfers the control information to the controller 201.

In FIG. 2, the controller 201 serves as a protocol controller, and controls the message generator 203 and the message reader 213. Alternatively, the controller 201 may perform the functions of the message generator 203 and the message reader 213. Basically, in FIG, 2, these elements are separately illustrated for ease of description, i.e., to more clearly provide separate descriptions of the functions. Accordingly, in actual realization, these elements can be configured such that all of the functions can be processed by the controller 201, or some of the functions can be processed by the controller 201.

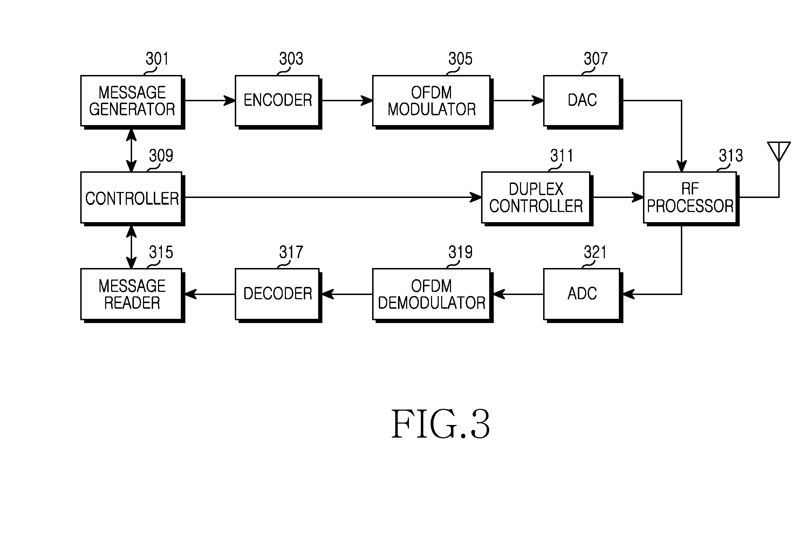

FIG. 3 is a block diagram illustrating a mobile station of a wireless communication system using an H-FDD scheme according to an embodiment of the present invention.

Referring to FIG. 3, the mobile station includes a controller 309, a message generator 301, an encoder 303, an OFDM modulator 305, a DAC 307, an RF processor 313, an ADC 321, an OFDM demodulator 319, a decoder 317, a message reader 315, and a duplexing controller 311.

The controller 309 of the mobile station provides information required for generating a control message to the message generator 301, performs a relevant process according to control information from the message reader 315, and detects resource allocation information enabling a relevant Full-FDD (F-FDD)mobile station to allocate uplink bursts to two uplink groups (a first uplink group and a second uplink group) by reading a MAP message transmitted from a base station according to an embodiment of the present invention. Specifically, the mobile station allocates uplink bursts to the first uplink group relevant to the group including a MAP message and the second uplink group not relevant to the group including a MAP message using one MAP message. The resource allocation information represents (1) whether to allocate uplink bursts to a gap between uplink subframes, i.e., allocate the uplink bursts to the a uplink group and the gap between the two uplink groups in succession, (2) whether to allocate the uplink bursts to a different subframe, i.e., allocate the uplink bursts, separately from the two uplink groups, or (3) whether to allocate the uplink bursts subsequently to two different uplink subframes, i.e., allocate the uplink bursts in succession to the two uplink groups.

Also, the controller 309 may determine whether to allocate the uplink bursts to the gap between the uplink subframes by identifying the gap between the uplink subframes using information included in a Downlink Channel Descriptor (DCD) message or an Uplink Channel Descriptor (UCD) message periodically received from the base station.

The message generator 301 generates a MAC management message using various information provided from the controller 309, and transfers the MAC management message to the encoder 303.

The encoder 303 encodes and modulates data (or message) from the message generator 315 according to a predetermined MCS, and outputs the encoded data. The OFDM modulator 305 outputs sample data (e.g., OFDM symbols) by performing IFFT on data from the encoder 303. The DAC 307 converts the sample data into analog signals. The duplexing controller 311 controls duplexing under control of the controller 309. The duplexing controller 311 determines a transmission/reception mode, and provides a mode switching signal to the RF processor 313 when it is determined that mode switching is needed.

The RF processor 313 performs transmission/reception mode switching under control of the duplexing controller 311. When a mode is switched to a transmission mode, the RF processor 313 sets a carrier to a second frequency, converts an analog signal from the DAC 307 into an RF signal using the second frequency f2 (an uplink carrier), and transmits the RF signal via an antenna. However, when a mode is switched to a reception mode, the RF processor 313 sets a carrier to a first frequency, and converts a signal received via the antenna into a baseband signal using a first frequency f1 (a downlink carrier). As described above, the present invention assumes that a mobile station operates using an F-FDD scheme.

The ADC 321 converts an analog signal from the RF processor 313 into sample data. The OFDM demodulator 319 outputs data in the frequency domain by performing FFT on the sample data output from the ADC 321. The decoder 317 aligns data in the frequency domain from the OFDM demodulator 319 on a burst basis, demodulates and decodes each burst according to a predetermined MCS, and outputs the decoded bursts.

The message reader 315 determines information required for identifying a gap between the uplink subframes by reading a DCD or an UCD periodically received from the base station, detects a packet (for example, a MAC PDU) of a predetermined unit from data provided from the decoder 317, and performs a header test and an error test on the detected packet. When it is determined that the detected packet is a control message, the message reader 315 reads the control message according to a prescribed standard and provides a result thereof to the controller 309.

The information determined by the message reader 315 denotes Transmit/receive Transition Gap (TTG), which is a gap with consideration of RF switching from transmit to receive and Round-Trip-Delay (RTD) with respect to each group, Receive/transmit Transition Gap (RTG), which is a gap with consideration of RF switching from receive to transmit, and DL_gap between the two DL subframes DL G1 and DL G2 in a general H-FDD/FDD frame structure.

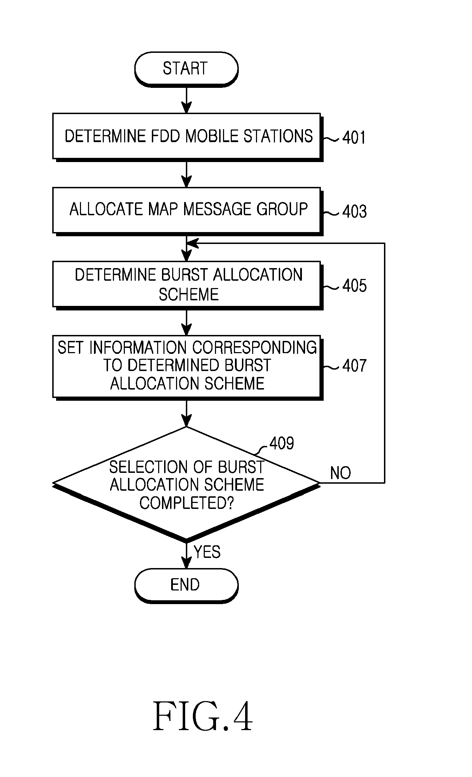

FIG. 4 is a flowchart illustrating a process of determining whether to allocate bursts to a gap between uplink subframes at a base station according to an embodiment of the present invention.

Referring to FIG. 4, in step 401, the base station determines mobile stations supporting the Full duplex-Frequency Division Duplex (F-FDD) scheme from mobile stations supporting the F-FDD scheme and the H-FDD scheme, and in step 403, allocates a group for a MAP message including information required for burst allocation. Specifically, the base station selects a group that includes a MAP message including information required for the burst allocation from two uplink groups transmitting and receiving data.

In step 405, the base station generates information enabling a relevant F-FDD mobile station to allocate uplink bursts to two uplink groups (a first uplink group and a second uplink group) using one MAP message, and determines an uplink burst allocation scheme for the first uplink group relevant to the group including a MAP message and the second uplink group not relevant to the group including a MAP message or vice versa.. The burst allocation scheme enables a relevant F-FDD mobile station to allocate uplink bursts to the two uplink groups (the first uplink group and the second uplink group) using the one MAP message. More specifically, the burst allocation scheme enables uplink burst allocation for the first uplink group including a MAP message and the second uplink group not including a MAP message or vice versa..For example, the base station determines (1) whether to allocate uplink bursts to a gap between uplink subframes, i.e., (allocate the uplink bursts to a uplink group and the gap between the two uplink groups in succession, (2) whether to allocate the uplink bursts to a different subframe, i.e., allocate the uplink bursts, separately from the two uplink groups, or (3) whether to allocate the uplink bursts subsequently to two different uplink subframes, i.e., allocate the uplink bursts in succession to the two uplink groups. In step 405, the base station may select one of the uplink burst allocation schemes. The uplink burst allocation schemes above maybe determined and selected for efficient use of the frame resource and maximum utilization of the characteristic of the F-FDD mobile station

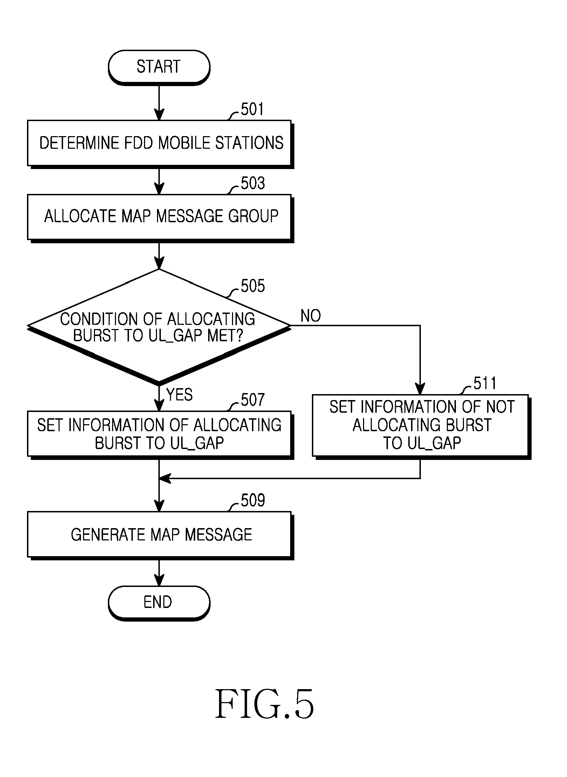

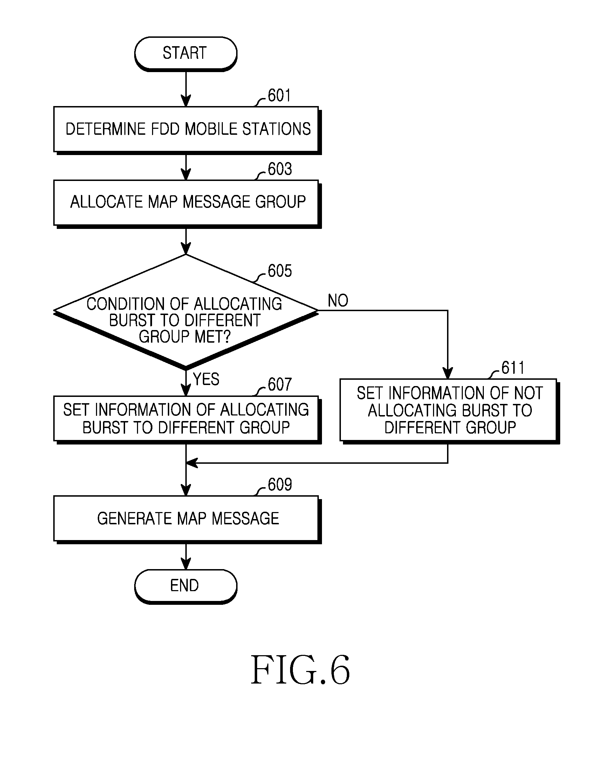

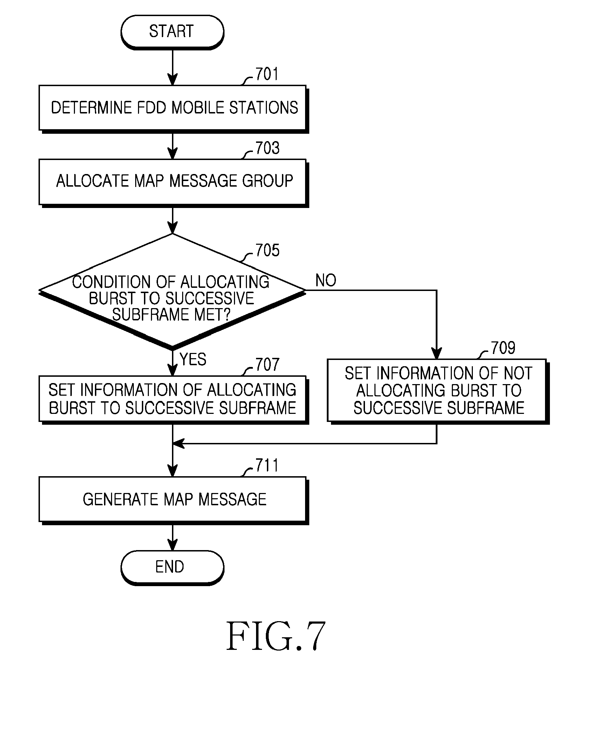

In step 407, the base station sets resource allocation information corresponding to the burst allocation scheme determined in step 405. The base station sets information as to whether to use the burst allocation schemes. When the base station selects a scheme of allocating uplink bursts to a gap between uplink subframes (i.e., inter-UL_gap allocation), the base station performs a process as will be described with reference to FIG. 5. When the base station selects a scheme of allocating uplink bursts to a subframe of a different uplink group (i.e., other_group allocation), the base station sets resource allocation information informing that bursts are allocated to the different uplink group, at a relevant field of a MAP message as illustrated in FIG. 6. When the base station selects a scheme of allocating uplink bursts to a successive subframe (i.e., over_subframe allocation), the base station sets resource allocation information informing that bursts are allocated to the successive subframe, at a relevant field of a MAP message as illustrated in FIG. 7.

The base station may set resource allocation information representing the burst allocation scheme at a relevant field of a MAP message defined by Table 1 below.

Table 1

| Table 370 OFDMA UL Zone Switch IE format | | |
|---|---|---|
| Syntax | Size | Notes |
| UL_ZONE IE0{ | - | - |
| Extended DUIUC | 4 bits | UL_Zone=0x04 |
| Length | 4 bits | Length=0x03 |
| OFDMA symbol offset | 7 bits | - |
| Permutation | 2 bits | 0b00 = PUSC permutation<br>0b01 = Optional PUSC permutation<br>0b10 = Adj acent subcarrier permutation<br>0b11 = Reserved |
| PUSC UL_IDcellPermbase | 7 bits | - |
| AMC type | 2 bits | Indicates the AMC type in case permutation type = 0b10, otherwise shall be set to 0.<br>AMC type (NxM = N bins by M symbols):<br>0b00: 1x6<br>0b01: 2x3<br>0b10: 3x2<br>0b11: Reserved |
| Use All SC indicator | 1 bits | 0= Do not use all subchannels<br>1= use all subchannels |
| Disable subchannel rotation | 1 bits | Only applies to PUSC permutation (see section 8.4.6.2.6) 0 = subchannel rotation enable 1 = subchannel rotation disable |
| H-FDD subframe indicator | 1 bits | Only applies to FDD/H-FDD<br>0b0: UL subframe relevant to current UL-MAP(or UL subframe 2(UL 1))<br>0b 1: The other UL subframe (or UL subframe 1(UL 2))<br>Shall be set to zero for TDD |
| H-F D D **Group over-**subframe allocation | 1 bits | Only applies to FDD/H-FDD<br>0 b 0 : Disable UL over-subframe allocation<br>0 b 1 : Enable UL over-subframe allocation |
| | | Shall be set to zero for TDD |
| H-FDD **inter-**UL_gap allocation | 1 bits | Only applies to FDD/H-FDD<br>0b0: Disable inter-UL_gap allocation<br>0b1: Enable inter-UL_gap allocation<br>Shall be set to zero for TDD |
| Reserved | 1 bits | Shall be set to zero for TDD |
| } | - | - |

The 802.16e standard (Institute of Electrical and Electronics Engineers (IEEE) 802.16 Rev2/D3) defines a region construction of an uplink subframe (or group) corresponding to a group to which UL-MAP belongs, through "OFDMA UL Zone Switch IE" as shown in Table 1. An embodiment of the present invention establishes an uplink subframe of a relevant group by setting one of the reserved bits of the "OFDMA UL Zone Switch IE" to "H-FDD UL subframe indicator" in order to define a region construction of a different subframe of two uplink subframes for supporting H-FDD inside the same frame, and enables uplink burst allocation to a different uplink group. Also, an embodiment of the present invention sets information enabling allocation of bursts to two different successive subframes by setting one different reserved bit to "H-FDD Group over-subframe allocation", and sets resource allocation information enabling burst allocation to a gap between uplink subframes by setting one different reserved bit to "H-FDD Inter-UL_gap allocation".

In step 409, the base station determines whether selection of a burst allocation scheme has been completed. When it is determined that the selection of the burst allocation scheme has not been completed, the process returns to step 405. However, when it is determined that the selection of the burst allocation scheme has been completed, the base station ends the present process.

FIG. 5 is a flowchart illustrating a process of setting information that enables a base station to allocate bursts to a gap between uplink subframes according to an embodiment of the present invention.

Referring to FIG. 5, in step 501, the base station determines mobile stations supporting the Full duplex-Frequency Division Duplex (F-FDD) scheme from among the mobile stations supporting the F-FDD scheme and the H-FDD scheme, and in step 503, allocates a MAP message group including information required for burst allocation. More specifically, the base station selects a group that includes a MAP message including information required for the burst allocation from two uplink groups transmitting and receiving data.

In step 505, the base station determines whether a condition for enabling burst allocation to a gap between uplink subframes, i.e., allocate the uplink bursts to a UL group and the gap between the two groups in succession, is satisfied. For example, the base station may determine that bursts can be allocated to the gap between the uplink subframes when the gap between the uplink subframes becomes a multiple of a slot representing a burst allocation unit.

When it is determined that the condition of allowing burst allocation to the gap between the uplink subframes is not satisfied in step 505, the base station sets information informing that bursts are not allocated to the gap between the uplink subframes, at a relevant field of a MAP message, and determines whether a scheme of allocating uplink bursts to a subframe of a different uplink group (other_group allocation) is satisfied, or whether a scheme of allocating uplink bursts to a successive subframe (over_subframe allocation) is satisfied in step 511.

When it is determined that the scheme of allocating the uplink bursts to the subframe of the different uplink group (other_group allocation) is satisfied, the base station sets information informing that bursts are allocated to the different uplink group, at a relevant field of a MAP message, as illustrated in FIG. 6. Also, when it is determined that the scheme of allocating the uplink bursts to the successive subframe (over_subframe allocation) is satisfied, the base station sets information informing bursts are allocated to the successive subframe, at a relevant field of a MAP message, as illustrated in FIG. 7.

However, when the condition for allowing burst allocation to the gap between the uplink subframes is satisfied in step 505, the base station sets resource allocation information informing that uplink bursts can be allocated to the gap between the uplink subframes, at a relevant field of a MAP message, in step 507. The field of a MAP message indicating whether the bursts are allocated to the gap between the uplink subframes or not is set may be the "H-FDD Inter-UL_gap allocation" field as shown in Table 1.

In step 509, the base station generates a MAP message including the above described information, and then ends the present process.

FIG. 6 is a flowchart illustrating a process of setting information that enables a base station to allocate bursts to a different uplink group according to an embodiment of the present invention.

Referring to FIG. 6, in step 601, the base station identifies mobile stations supporting the Full duplex-Frequency Division Duplex (F-FDD) scheme from among the mobile stations supporting the F-FDD scheme and the H-FDD scheme, and in step 603, allocates a MAP message group including information required for burst allocation. More specifically, the base station selects a group that includes a MAP message including information required for the burst allocation from two uplink groups transmitting and receiving data.

In step 605, the base station determines whether a condition for allocating bursts to a different uplink group is satisfied.

When it is determined that the condition for allocating the bursts to the different uplink group is not satisfied, the base station sets resource allocation information informing that the bursts are not allocated to the different uplink group, at a relevant field of a MAP message, determines a burst allocation scheme as described above, and sets information corresponding to the burst allocation scheme (for example, the scheme of allocating uplink bursts to a gap between uplink subframes, i.e., allocate the uplink bursts to a UL group and the gap between the two groups in succession (inter-UL_gap allocation), or the scheme of allocating uplink bursts to a successive subframe (over_subframe allocation)) in step 611.

However, when it is determined that the condition for allocating the bursts to the different uplink group is satisfied, the base station sets information informing that bursts are allocated to the different uplink group, at a relevant field of a MAP message, in step 607. The field of a MAP message indicating whether the bursts are allocated to the different subframe or not is set may be the "H-FDD UL subframe indicator" field as shown in Table 1.

In step 609, the base station generates a MAP message including the above-described information, and then ends the present process.

FIG. 7 is a flowchart illustrating a process of setting information that enables a base station to allocate bursts to a successive subframe according to an embodiment of the present invention.

Referring to FIG. 7, in step 701, the base station identifies mobile stations supporting the Full duplex-Frequency Division Duplex (F-FDD) scheme from among the mobile stations supporting the F-FDD scheme and the H-FDD scheme, and in step 703, allocates a MAP message group including information required for burst allocation. More specifically, the base station selects a group that includes a MAP message including information required for the burst allocation from two uplink groups transmitting and receiving data.

In step 705, the base station determines whether a condition for allocating bursts to a successive subframe is satisfied.

When it is determined that the condition for allocating the bursts to the successive subframe is not satisfied, the base station sets resource allocation information informing that the bursts are not allocated to the successive subframe, at a relevant field of a MAP message, determines a burst allocation scheme as described above, and sets information corresponding to the burst allocation scheme (for example, the scheme of allocating uplink bursts to a gap between uplink subframes, i.e., allocate the uplink bursts to a UL group and the gap between the two groups in succession, (inter-UL_gap allocation), or the scheme of allocating uplink bursts to a subframe of a different uplink group (other_group allocation)) in step 709.

However, when it is determined that the condition for allocating the bursts to the successive subframe is met, the base station sets resource allocation information informing that the bursts are allocated to the successive subframe, at a relevant field of a MAP message, in step 707. The field of a MAP message indicating whether the bursts are allocated to the successive subframe or not is set may be the "H-FDD Group over-subframe allocation" field as shown in Table 1.

In step 711, the base station generates a MAP message including the above-described information, and then ends the present process.

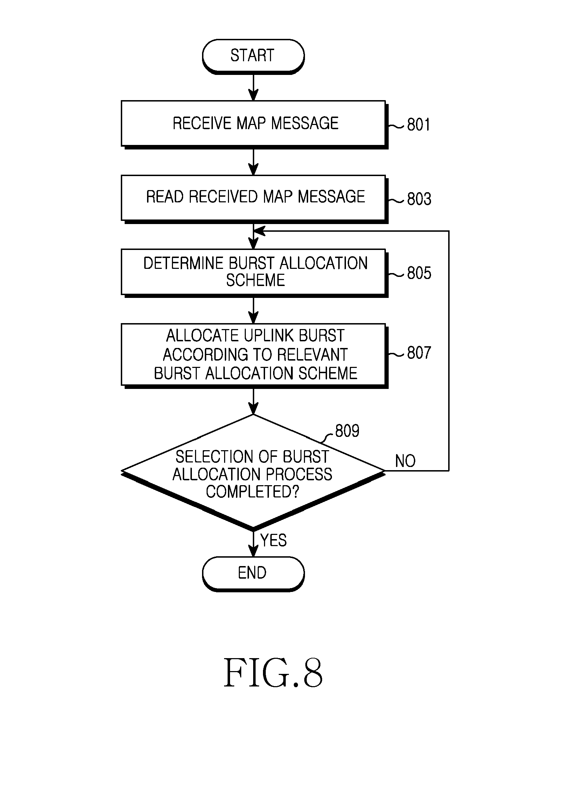

FIG. 8 is a flowchart illustrating a process of allocating uplink bursts at a mobile station according to an embodiment of the present invention.

Referring to FIG. 8, in step 801, the mobile station receives a MAP message from a base station, and in step 803, reads the received MAP message. According to an embodiment of the present invention, the received MAP message includes resource allocation information enabling allocation of uplink bursts to a first uplink group relevant to the group including a MAP message and a second uplink group not relevant to the group including a MAP message using one MAP message. More specifically, the resource allocation information indicates (1) whether to allocate uplink bursts to a gap between uplink subframes, i.e., allocate the uplink bursts to the a uplink group and the gap between the two uplink groups, (2) whether to allocate the uplink bursts to a different subframe, i.e., allocate the uplink bursts, separately from the two uplink groups, or (3) whether to allocate the uplink bursts subsequently to two different uplink subframes, i.e., allocate the uplink bursts in succession to the two uplink groups.

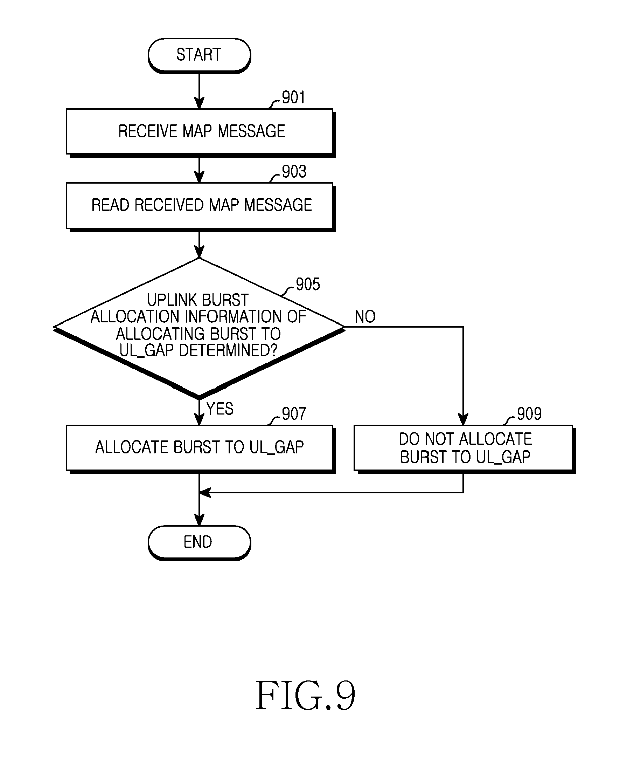

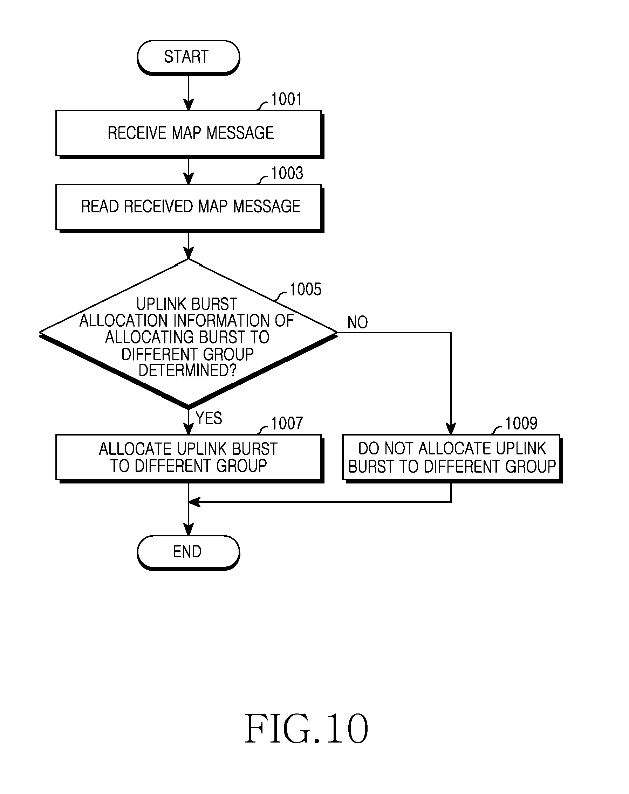

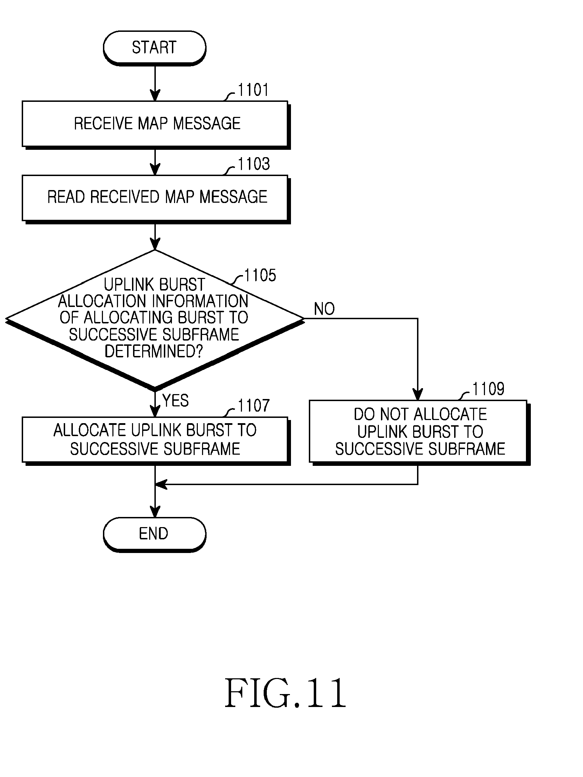

In step 805, the mobile station determines the uplink burst allocation schemebased on the information included in the MAP message, and in step 807, allocates the uplink bursts according to the uplink burst allocation scheme determined in step 805. When determining resource allocation information instructing the scheme of allocating uplink bursts to a gap between uplink subframes (inter-UL_gap allocation), the mobile station performs a process as illustrated FIG. 9. However, when determining resource allocation information instructing the scheme of allocating uplink bursts to a subframe of a different uplink group (other_group allocation), the mobile station performs a process as illustrated in FIG. 10. Further, when determining resource allocation information instructing the scheme of allocating uplink bursts to a successive subframe (over_subframe allocation), the mobile station performs a process as illustrated in FIG. 11.

During the uplink burst allocation, the mobile station determines a relative start position in a specific region inside an uplink subframe through accumulation of a previous burst allocation size, or may perform the allocation using an absolute symbol offset of an uplink burst allocation start point, and a subchannel offset provided by the base station.

Accordingly, the mobile station can allocate uplink bursts of an uplink subframe included in different uplink groups through one UL-MAP of an H-FDD frame. Because a start point of burst allocation may exist in both two uplink subframes during overlay type allocation where allocation is performed over two uplink subframes, an offset inside a relevant group should be determined while an absolute start position is determined. The mobile station may determine the offset by analyzing an information element of UL MAP (UL Allocation Start IE or HARQ UL MAP IE) as shown in Table 2 below.

Table 2

| Syntax | Size | Notes |
|---|---|---|
| UL_Allocation_start_IEO{ | - | - |
| Extended UIUC | 4 bits | UL_Allocation_start_IE0=0x0A |
| Length | 4 bits | Length=0x02 |
| OFDMA symbol offset | 8 bits | This value indicates start symbol offset of all subsequent UL allocations in this UL_MAP message(UL_MAP or SUB_UL_DL_MAP) |
| Subchannel offset | 7 bits | This value indicates start subchannel offset of all subsequent UL data burst allocations in this message(UL_MAP or SUB_UL_DL_MAP) |
| H-FDD UL subframe indicator | 1 | Only applies to FDD/H-FDD<br>0b0 : UL subframe relevant to current UL-MAP(or UL subframe 2(UL1))<br>0b1: The other UL subframe (or UL subframe 1(UL2)<br>Shall be set to zero for TDD |
| } | - | - |

Table 2 shows that the offset has been set for a specific uplink group by setting one reserved bit of the "UL Allocation Start IE", which is one kind of an information element of UL MAP, to a "H-FDD UL subframe indicator" field.

In step 809, the mobile station determines whether a burst allocation process has been completed. When the burst allocation process has not been completed, the mobile station repeatedly performs a process of step 805. However, when the burst allocation process has been completed, the mobile station ends the present process.

FIG. 9 is a flowchart illustrating a process of allocating uplink bursts to a gap between uplink subframes at a mobile station according to an embodiment of the present invention.

Referring to FIG. 9, in step 901, the mobile station receives a MAP message from a base station, and in step 903, reads the received MAP message. According to an embodiment of the present invention, the received MAP message includes resource allocation information indicating the scheme of allocating uplink bursts to a gap between uplink subframes, i.e., allocate the uplink bursts to a UL group and the gap between the two groups in succession(inter-UL_gap allocation), the scheme of allocating uplink bursts to a subframe of a different uplink group (other_group allocation), or the scheme of allocating uplink bursts to a successive subframe (over_subframe allocation).

In step 905, the mobile station determines whether the received MAP message includes resource allocation information representing the scheme of allocating uplink bursts to the gap between the uplink subframes from an "H-FDD Inter-UL_gap allocation" field of the MAP message.

When it is determined that the MAP message includes the resource allocation information enabling allocation of the uplink bursts to the gap between the uplink subframes, the mobile station allocates the uplink bursts to the gap between the uplink subframes in step 907. However, when it is determined that the MAP message includes the resource allocation information not enabling allocation of the uplink bursts to the gap between the uplink subframes, the mobile station does not allocate the uplink bursts to the gap between the uplink subframes, and determines whether the MAP message includes information of allocating uplink bursts to a subframe of a different uplink group (other_group allocation), or includes information of allocating uplink bursts to a successive subframe (over_subframe allocation), and performs an operation corresponding to relevant information in step 909.

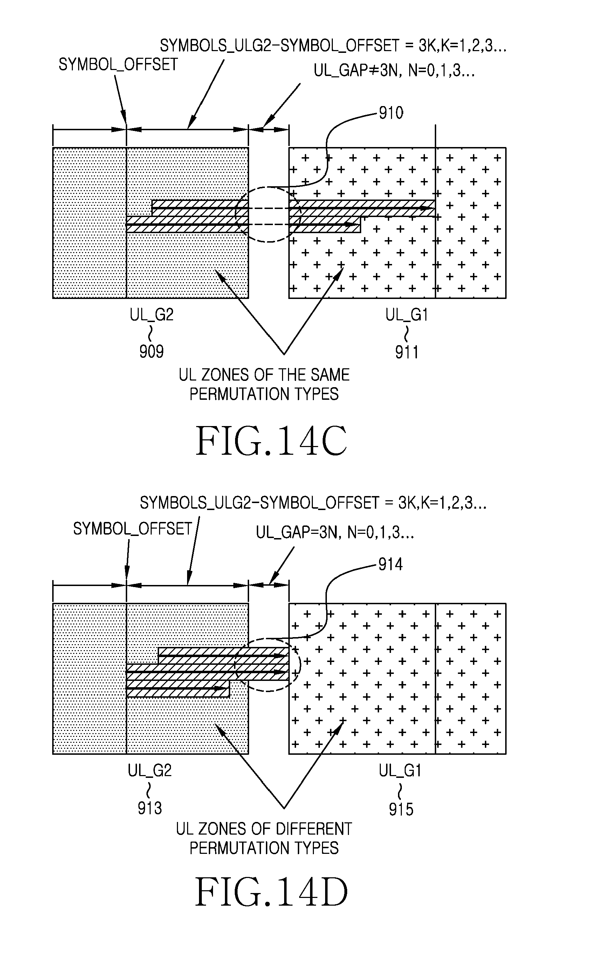

An example of a scheme for allocating the gap between the uplink subframes is illustrated in FIG. 14D.

Referring to FIG.14D, uplink bursts are allocated (914) to an uplink subframe region 913 corresponding to a different uplink group (group 2) and the gap between the uplink subframes using UL-MAP which belongs to a specific group (group 1) according to an embodiment of the present invention.

FIG. 10 is a flowchart illustrating a process of allocating uplink bursts to a different uplink group at a mobile station according to an embodiment of the present invention.

Referring to FIG. 10, in step 1001, the mobile station receives a MAP message from a base station, and in step 1003, reads the received MAP message. According to an embodiment of the present invention, the received MAP message includes resource allocation information indicating the scheme of allocating uplink bursts to a gap between uplink subframes (inter-UL_gap allocation), the scheme of allocating uplink bursts to a subframe of a different uplink group (other_group allocation), or the scheme of allocating uplink bursts to a successive subframe (over_subframe allocation).

In step 1005, the mobile station determines whether the received MAP message includes resource allocation information allocating uplink bursts to the different uplink group by identifying an "H-FDD UL subframe indicator" field of the MAP message.

When it is determined that the MAP message includes the resource allocation information allocating the uplink bursts to the different uplink group, in step 1007, the mobile station allocates the uplink bursts to a relevant group. However, when it is determined that the MAP message includes the resource allocation information not allocating the uplink bursts to the different uplink group, in step 1009, the mobile station does not perform a process of allocating the uplink bursts to the relevant group, determines whether the MAP message includes information of allocating uplink bursts to a gap between uplink subframes, i.e., allocate the uplink bursts to a UL group and the gap between the two groups in succession, or includes information of allocating uplink bursts to a successive subframe (over_subframe allocation), and performs an operation corresponding to relevant information.

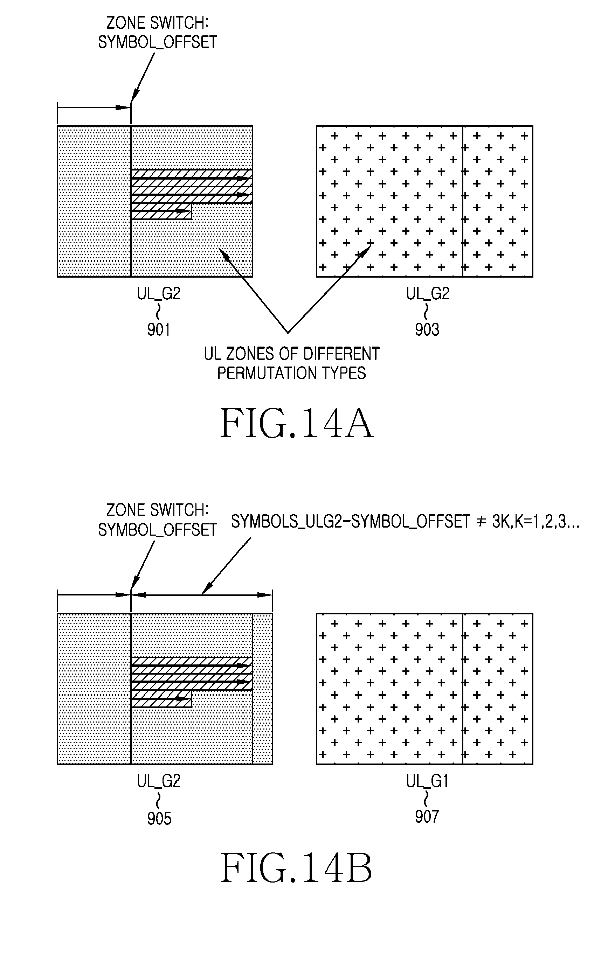

Examples of schemes for allocating uplink bursts to the different uplink group are illustrated in FIGS. 14A and 14B. More specifically, FIG. 14A illustrates bursts being allocated to an uplink subframe region 901 corresponding to a different uplink group (group 2) using UL-MAP which belongs to a specific group (group 1) according to an embodiment of the present invention, and FIG. 14B illustrates bursts being allocated to an uplink subframe region 905 corresponding to a different uplink group (group 2) using UL-MAP which belongs to a specific group (group 1), and the uplink bursts are allocated by a multiple number of a slot, which is an uplink burst allocation unit, according to an embodiment of the present invention.

FIG. 11 is a flowchart illustrating a process of allocating bursts to a successive subframe at a mobile station according to an embodiment of the present invention.

Referring to FIG. 11, in step 1101, the mobile station receives a MAP message from a base station, and in step 1103, reads the received MAP message. According to an embodiment of the present invention, the received MAP message includes resource allocation information indicating the scheme of allocating uplink bursts to a gap between uplink subframes, i.e., allocate the uplink bursts to a UL group and the gap between the two groups in succession (inter-UL_gap allocation), the scheme of allocating uplink bursts to a subframe of a different uplink group (other_group allocation), or the scheme of allocating uplink bursts to a successive subframe (over_subframe allocation).

In step 1105, the mobile station determines whether the received MAP message includes resource allocation information allocating uplink bursts to the successive subframe by identifying an "H-FDD Group over-subframe allocation" field of the MAP message.

When it is determined that the MAP message includes the resource allocation information allocating the uplink bursts to the successive subframe, in step 1107, the mobile station allocates the uplink bursts to the successive subframe. However, when it is determined that the MAP message includes the resource allocation information not allocating the uplink bursts to the successive subframe, in step 1109, the mobile station does not perform a process of allocating the uplink bursts to the successive subframe, determines whether the MAP message includes information of allocating the bursts to a gap between uplink subframes, or includes information of allocating the uplink bursts to a subframe of a different uplink group (other_group allocation), and performs an operation corresponding to relevant information.

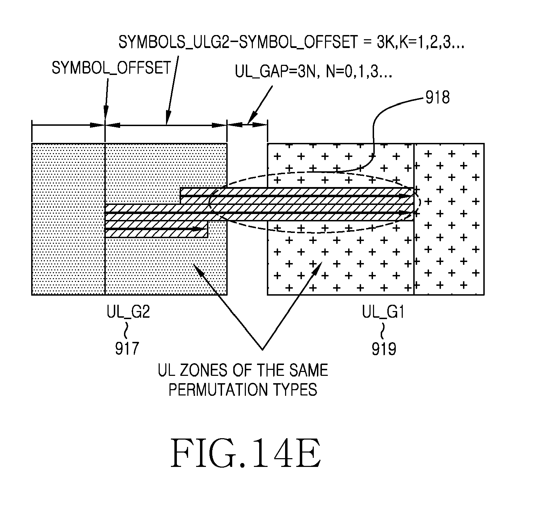

Examples of schemes of allocating the uplink bursts to the successive subframe are illustrated in FIGS. 14C and 14E. More specifically, FIG. 14C illustrates that the uplink bursts are allocated to an uplink subframe region 909 corresponding to a different uplink group (group 2) and a different subframe 911 in succession using UL-MAP which belongs to a specific group (group 1) according to an embodiment of the present invention. The uplink bursts are not allocated (910) to a gap between the uplink subframes.

Further, FIG. 14E illustrates the uplink bursts are allocated (919) to an uplink subframe region 917 corresponding to a different uplink group (group 2) and a different subframe using UL-MAP that belongs to a specific group (group 1) according to an embodiment of the present invention. The uplink bursts are allocated (918) to even a gap between the uplink subframes.

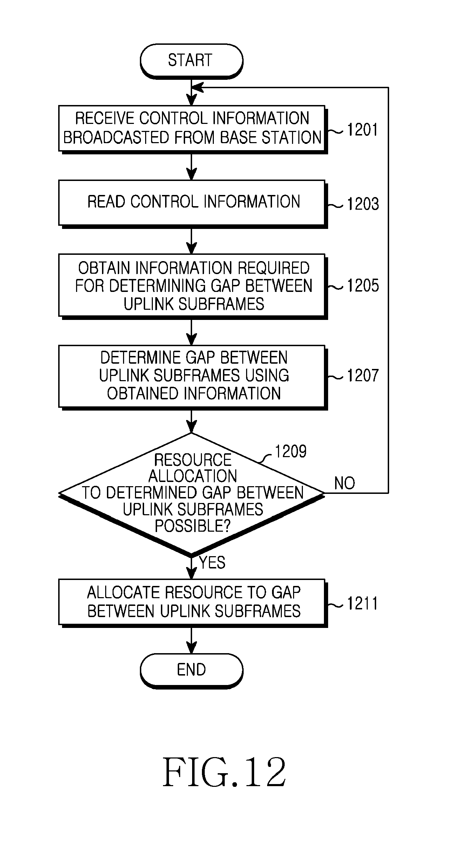

FIG. 12 is a flowchart illustrating a process of determining whether a mobile station satisfies a condition for allocating bursts to a gap UL_gap between uplink subframes according to an embodiment of the present invention. More specifically, FIG. 12 illustrates an example where a determination process at the base station as described in FIG. 4 is performed at the mobile station.

In step 1201, the mobile station receives control information broadcasted from a base station, and in step 1203, reads the control information. The control information is information periodically broadcasted by the base station, and may include a DCD message or an UCD message.

In step 1205, the mobile station obtains information required for determining a gap (UL_gap) between uplink subframes from the control information read and obtained in step 1203. In step 1207, the mobile station determines the gap (UL_gap) between the uplink subframes using the information. The information required for determining the gap (UL_gap) between the uplink subframes denotes a TTG, an RTG, and a gap (DL_gap) between downlink subframes which are gaps with consideration of RF switching and a Round-Trip-Delay (RTD) with respect to each group in a general H-FDD/F-FDD frame structure.

Also, the mobile station may determine the gap (UL_gap) between the uplink subframes using Equation (1) below.

$$UL\_gap = TTG1 + RGT2 - DL\_gap \quad \ldots\ldots (1)$$

In Equation (1), TTG1 is a gap between subframes corresponding to a group 1 switched from a transmission mode to a reception mode, RGT2 is a gap between subframes corresponding to a group 2 switched from a reception mode to a transmission mode, and DL_gap is a gap between downlink subframes.

In step 1209, the mobile station determines whether bursts can be allocated to the above-determined gap between the uplink subframes. The mobile station may determine that bursts can be allocated to the gap between the uplink subframes when the gap between the uplink subframes becomes a multiple of a slot that represents a burst allocation unit.

When it is determined that bursts cannot be allocated to the above-determined gap between the uplink subframes, the mobile station returns to step 1201 and receives control information broadcasted periodically from the base station. However, when it is determined that bursts can be allocated to the above-determined gap between the uplink subframes, in step 1211, the mobile station allocates bursts to the gap between the uplink subframes, and then ends the present process.

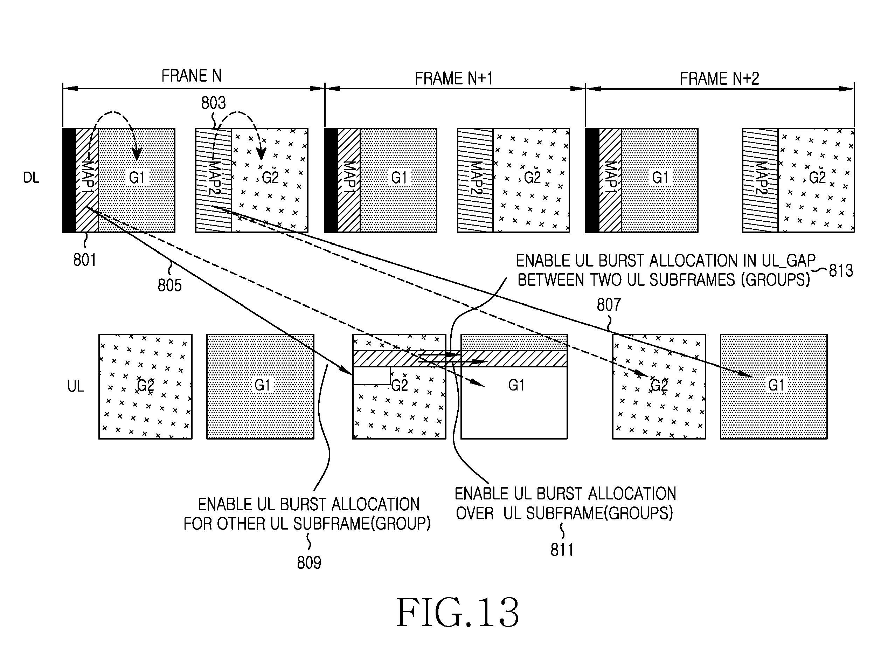

FIG. 13 illustrates a frame construction of a wireless communication system that uses an H-FDD scheme according to an embodiment of the present invention.

In FIG. 13, DL-MAP/UL-MAP includes not only downlink bursts and uplink bursts allocated to a relevant group but also "H-FDD UL subframe indicator", "H-FDD Group over-subframe allocation", and "H-FDD Inter-UL_gap allocation". "H-FDD UL subframe indicator" is information for informing a region construction of the other subframe of two uplink subframes for supporting H-FDD inside the same frame. "H-FDD Group over-subframe allocation" is information of enabling allocation of bursts to a different subframe. "H-FDD Inter-UL_gap allocation" is information of enabling allocation of bursts to a gap between uplink subframes. In other words, setting information of an uplink subframe region corresponding to a different uplink group is signaled using UL-MAP that belongs to a specific group, and bursts are allocated to an uplink subframe corresponding to a different uplink group using UL-MAP which belongs to a specific group.

For example, setting information of a subframe region for a group 2 is signaled using a MAP message (UL-MAP1) 801 included in a group 1, and setting information of a region for a group 1 is signaled using a MAP message (UL-MAP2) 803 that belongs to a group 2.

Accordingly, uplink bursts are allocated (809) to an uplink subframe of a group 2, or uplink bursts are allocated (811) to a subframe of a different uplink group using UL-MAP1 that belongs to a group 1, or uplink bursts are allocated (813) to the gap between the two groups in succession..

FIGs. 14A-14E illustrate a circumstance where bursts are allocated to a gap between uplink subframes and a different subframe in a wireless communication system that uses an H-FDD scheme according to an embodiment of the present invention.

FIG. 14A illustrates that bursts are allocated to an uplink subframe region 901 corresponding to a different uplink group (group 2) which is not relevant to the group including a MAP message, using UL-MAP which belongs to a specific group (group 1) according to an embodiment of the present invention.

FIG. 14B illustrates that bursts are allocated to an uplink subframe region 905 corresponding to a different uplink group (group 2) which is not relevant to the group including a MAP message, using UL-MAP which belongs to a specific group (group 1), and the uplink bursts are allocated by a multiple of a slot which is an uplink burst allocation unit according to an embodiment of the present invention.

FIG. 14C illustrates the uplink bursts are allocated to an uplink subframe region 909 corresponding to a different uplink group (group 2) which is not relevant to the group including a MAP message and a different subframe 911 in succession using UL-MAP which belongs to a specific group (group 1) according to an embodiment of the present invention. The uplink bursts are not allocated to a gap (910) between the uplink subframes.

FIG. 14D illustrates the uplink bursts are allocated to an uplink subframe region 913 corresponding to a different uplink group (group 2) which is not relevant to the group including a MAP message and a gap between the uplink subframes using UL-MAP which belongs to a specific group (group 1) according to an embodiment of the present invention.

FIG. 14E illustrates the uplink bursts are allocated to an uplink subframe region 917 corresponding to a different uplink group (group 2) which is not relevant to the group including a MAP message and a different subframe 919 using UL-MAP which belongs to a specific group (group 1) according to an embodiment of the present invention. The uplink bursts are allocated (918) to even a gap between the uplink subframes.

As described above, the various embodiments of the present invention enable uplink resource allocation such that the characteristic of an F-FDD mobile station may be effectively utilized in an H-FDD type frame structure by determining a resource allocation scheme instructing uplink burst allocation for two groups, generating a MAP message including the determined resource allocation scheme, and enabling a mobile station to allocate a resource according to the resource allocation scheme.

While the present invention has been shown and described with reference to certain embodiments thereof, it will be understood by those skilled in the art that various changes in form and details may be made therein without departing from the spirit and scope of the invention as defined by the appended claims and their equivalents.

**Claims**

1. A transmitter that enables a Full duplex - Frequency Division Duplex (F-FDD) mobile station to allocate uplink bursts in a mobile communication system having a Half-Frequency Division Duplex (H-FDD) frame structure, the transmitter comprising:

   a controller (201) adapted to determined a resource allocation scheme that enables the F-FDD mobile station to allocate the uplink bursts to a first group and a second group using one MAP message; and
   a message generator (201) adapted to generate the MAP message indicating the resource allocation scheme determined by the controller.

2. The transmitter of claim 1, wherein the MAP message comprises at least one of:

   information regarding a specific region of an uplink subframe; and
   an uplink burst allocation method.

3. The transmitter of claim 1, wherein the resource allocation scheme comprises at least one of:

   a scheme of separately allocating the uplink bursts to the first group and the second group;
   a scheme of allocating the uplink bursts to the first group and the second group in succession; and
   a scheme of allocating the uplink bursts to the first group and the second group in succession with the uplink bursts allocated to the a group and the gap between the the first group and the second group.

4. A method of enabling a Full duplex - Frequency Division Duplex (F-FDD) mobile station, by a transmitter, to allocate uplink bursts in a mobile communication system having a Half-Frequency Division Duplex (H-FDD) frame structure, the method comprising:

   determining, by the transmitter, a resource allocation scheme that enables the F-FDD mobile station to allocate the uplink bursts to a first group and a second group using one MAP message; and
   generating a MAP message indicating the determined resource allocation scheme.

5. The method of claim 4, wherein the MAP message includes at least one of information regarding a specific region of an uplink subframe, and an uplink burst allocation method.

6. The method of claim 4, wherein the resource allocation scheme includes at least one of a scheme of separately allocating the uplink bursts to the first group and the second group, a scheme of allocating the uplink bursts to the first group and the second group in succession, and a scheme of allocating the uplink bursts to the first group and the second group in succession with the uplink bursts allocated to the a group and the gap between the the first group and the second group.

7. An apparatus for enabling a Full duplex-Frequency Division Duplex (F-FDD) mobile station to allocate uplink bursts in a mobile communication system having a Half-Frequency Division Duplex (H-FDD) frame structure, the apparatus comprising:

   a message reader (315) adapted to determine a resource allocation scheme indicating uplink burst allocation to a first group and a second group based on one received MAP message; and
   a controller (309) adapted to allocate the uplink bursts to the first group and the second group according to the determined resource allocation scheme.

8. The apparatus of claim 7, wherein the MAP message comprises at least one of:

information regarding a specific region of an uplink subframe; and
an uplink burst allocation method.

9. The apparatus of claim 7, wherein the resource allocation scheme comprises at least one of:

a scheme of separately allocating the uplink bursts to the first group and the second group;
a scheme of allocating the uplink bursts to the first group and the second group in succession; and
a scheme of allocating the uplink bursts to the first group and the second group in succession, with the uplink bursts allocated to the a group and the gap between the the first group and the second group.

10. A method of enabling a Full duplex - Frequency Division Duplex (F-FDD) mobile station to allocate uplink bursts in a mobile communication system having a Half-Frequency Division Duplex (H-FDD) frame structure, the method comprising:

determining, by the F-FDD mobile station, a resource allocation scheme indicating uplink burst allocation to a first group and a second group based on one received MAP message; and
allocating uplink bursts to the first group and the second group according to the determined resource allocation scheme.

11. The method of claim 10, wherein the resource MAP message includes at least one of information regarding a specific region of an uplink subframe, and an uplink burst allocation method.

12. The method of claim 10, wherein the resource allocation scheme includes at least one of a scheme of separately allocating the uplink bursts to the first group and the second group, a scheme of allocating the uplink bursts to the first group and the second group in succession, and a scheme of allocating the uplink bursts to the first group and the second group in succession, with the uplink bursts allocated to the a group and the gap between the the first group and the second group.

FIG.1
(PRIOR ART)

FIG.2

FIG.3

START

DETERMINE FDD MOBILE STATIONS ~401

ALLOCATE MAP MESSAGE GROUP ~403

DETERMINE BURST ALLOCATION SCHEME ~405

SET INFORMATION CORRESPONDING TO DETERMINED BURST ALLOCATION SCHEME ~407

409
SELECTION OF BURST ALLOCATION SCHEME COMPLETED?     NO

YES

END

FIG.4

FIG.5

START

601
DETERMINE FDD MOBILE STATIONS

603
ALLOCATE MAP MESSAGE GROUP

605
CONDITION OF ALLOCATING BURST TO DIFFERENT GROUP MET? — NO

YES

607
SET INFORMATION OF ALLOCATING BURST TO DIFFERENT GROUP

611
SET INFORMATION OF NOT ALLOCATING BURST TO DIFFERENT GROUP

609
GENERATE MAP MESSAGE

END

FIG.6

FIG.7

START

RECEIVE MAP MESSAGE ~801

READ RECEIVED MAP MESSAGE ~803

DETERMINE BURST ALLOCATION SCHEME ~805

ALLOCATE UPLINK BURST ACCORDING TO RELEVANT BURST ALLOCATION SCHEME ~807

~809
SELECTION OF BURST ALLOCATION PROCESS COMPLETED?  NO

YES

END

FIG.8

START

901

RECEIVE MAP MESSAGE

903

READ RECEIVED MAP MESSAGE

905

UPLINK BURST ALLOCATION INFORMATION OF ALLOCATING BURST TO UL_GAP DETERMINED?

NO

YES

907

ALLOCATE BURST TO UL_GAP

909

DO NOT ALLOCATE BURST TO UL_GAP

END

FIG.9

START

RECEIVE MAP MESSAGE ⟋1001

READ RECEIVED MAP MESSAGE ⟋1003

UPLINK BURST
ALLOCATION INFORMATION OF ⟋1005
ALLOCATING BURST TO
DIFFERENT GROUP
DETERMINED?

NO

YES

ALLOCATE UPLINK BURST
TO DIFFERENT GROUP ⟋1007

DO NOT ALLOCATE UPLINK
BURST TO DIFFERENT GROUP ⟋1009

END

# FIG.10

FIG.11

START

RECEIVE CONTROL INFORMATION
BROADCASTED FROM BASE STATION ~1201

READ CONTROL INFORMATION ~1203

OBTAIN INFORMATION REQUIRED
FOR DETERMINING GAP BETWEEN
UPLINK SUBFRAMES ~1205

DETERMINE GAP BETWEEN
UPLINK SUBFRAMES USING
OBTAINED INFORMATION ~1207

RESOURCE
ALLOCATION
TO DETERMINED GAP BETWEEN
UPLINK SUBFRAMES
POSSIBLE? ~1209

NO

YES

ALLOCATE RESOURCE TO GAP
BETWEEN UPLINK SUBFRAMES ~1211

END

FIG.12

FIG.13

EP 2 111 080 A2

ZONE SWITCH:
SYMBOL_OFFSET

UL_G2

901

UL_G2

903

UL ZONES OF DIFFERENT
PERMUTATION TYPES

# FIG.14A

ZONE SWITCH:
SYMBOL_OFFSET

SYMBOLS_ULG2−SYMBOL_OFFSET ≠ 3K,K=1,2,3...

UL_G2

905

UL_G1

907

# FIG.14B

SYMBOLS_ULG2-SYMBOL_OFFSET = 3K,K=1,2,3...

SYMBOL_OFFSET

UL_GAP≠3N, N=0,1,3...

910

UL_G2
909

UL_G1
911

UL ZONES OF THE SAME
PERMUTATION TYPES

FIG.14C

SYMBOLS_ULG2-SYMBOL_OFFSET = 3K,K=1,2,3...

SYMBOL_OFFSET

UL_GAP=3N, N=0,1,3...

914

UL_G2
913

UL_G1
915

UL ZONES OF DIFFERENT
PERMUTATION TYPES

FIG.14D

SYMBOLS_ULG2−SYMBOL_OFFSET = 3K,K=1,2,3...

SYMBOL_OFFSET

UL_GAP=3N, N=0,1,3...

918

UL_G2
⟩
917

UL_G1
⟩
919

UL ZONES OF THE SAME
PERMUTATION TYPES

FIG.14E